# EUROPEAN PATENT APPLICATION

(11) **EP 4 001 897 A1**
(43) Date of publication of application: **25.05.2022**
(21) Application number: 20840724.7
(22) Date of filing: 24.06.2020
(51) Int. Cl.: G01N 15/12, G01N 27/00

(54) **STORAGE METHOD AND PRODUCTION METHOD FOR PARTICLE ANALYSIS INSTRUMENT**

(30) Priority: 17.07.2019 JP 2019131545
(71) Applicant: NOK Corporation, Tokyo 105-8585 (JP)
(72) Inventor: MUROTA, Yuki, Tsujido-shinmachi, F ujisawa-shi, Kanagawa 251- 0042 (JP); YOSHITOMI, Takumi, Tsujido-shinmachi, F ujisawa-shi, Kanagawa 251- 0042 (JP); FUJISAWA, Naohiro, Tsujido-shinmachi, F ujisawa-shi, Kanagawa 251- 0042 (JP)
(74) Representative: TBK
(86) International application number: PCT/JP2020/024739
(87) International publication number: WO 2021/010112

(57) **Abstract**

A method for storing a particle analyzer capable of suppressing deterioration of a measurement performance with the lapse of time in a particle analyzer for analyzing particles such as exosomes, pollen, viruses, and bacteria is provided.

A method for storing a particle analyzer having a first storage chamber in which a first liquid is stored, a second storage chamber in which a second liquid containing particles to be analyzed is stored, and a flow path connecting the first storage chamber in fluid communication with the second storage chamber, wherein at least a portion of the first storage chamber, the second storage chamber, and the flow path are surface-treated, which includes filling an internal space defined by the first storage chamber, the second storage chamber, and the flow path with a liquid to thereby store the particle analyzer in a state that the surface-treated portion is not in contact with air.

## Description

### Technical Field

The present invention relates to a method for storing a particle analyzer and a method for manufacturing the same. More specifically, the present invention relates to a method for storing a particle analyzer capable of suppressing deterioration of a measurement performance with the lapse of time in the particle analyzer, and a method for manufacturing the same.

### Background Art

Conventionally, in order to detect and analyze one particle of, for example, exosomes, pollen, viruses, bacteria, and DNA, a detection method using nanopores (see, for example, Patent Document 1) and a particle analyzer having the nanopore have been proposed (see, for example, Patent Document 2).

The particle analyzer analyzes particles in the following manner. Specifically, the particle analyzer has a pore connecting two spaces, the one space stores liquid and the other space stores liquid containing the particles to be analyzed. These spaces are given different electric potentials and electrophoresis allows the particles to pass through the pore. A change in a value of electric current flowing through the liquid is measured when the particle passes through the pore. In this manner, the characteristics, for example, type, shape, and size, of the particles that have passed through the pores can be analyzed.

When particle detection is performed using a particle analyzer in which nanopores are formed, surface treatment of the surface constituting the nanopores and the like is performed from the viewpoint that, especially, it is necessary to flow in the nanopores without clogging the liquid or the particles (see, for example, Patent Documents 3 and 4).

### Citation List

### Patent Documents

[Patent Document 1] JP-A-2014-174022
[Patent Document 2] JP-B-5866652
[Patent Document 3] International Publication WO2018/105229
[Patent Document 4] JP-A-2017-187443
[Patent Document 5] International Publication WO2019/008736

### Summary of the Invention

### Problem to be solved by the Invention

When the surface treatment is performed as described in Patent Documents 3 and 4, however, there is a concern that volatiles and eluates are generated over time from a resin or a rubber such as a silicone rubber constituting a nanopore and the like, and which contaminate the nanopores and the like so that the effect of surface treatment cannot be sufficiently obtained, and as a result, the particle detection capability decreases. In other words, there is a concern that the particle detection capability deteriorates with the lapse of time. For this reason, it has been desired to develop a method capable of suppressing a desired effect of the surface treatment from deteriorating with the lapse of time at an early stage, that is, a method capable of maintaining the effect of the surface treatment for a long period of time in the particle analyzer subjected to the surface treatment.

Patent Document 5 describes a storing device for storing a Si thin film before processing a pore (nanopore). However, Patent Document 5 does not describe suppressing the deterioration of the particle detection capability with the lapse of time in a particle analyzer in which nanopores are formed and subjected to the surface treatment.

The present invention has been made in view of the above-mentioned prior art. The present invention provides a method for storing a particle analyzer capable of suppressing deterioration of a measurement performance, i.e., a particle detection capability, with the lapse of time in the particle analyzer subjected to the surface treatment and a method for manufacturing the same.

### Means for Solving the Problem

According to the present invention, there is provided a method for storing a particle analyzer and a method for manufacturing the same, which are described below.
[1] A method for storing a particle analyzer having a first storage chamber in which a first liquid is stored, a second storage chamber in which a second liquid containing particles to be analyzed is stored, and a flow path connecting the first storage chamber in fluid communication with the second storage chamber, wherein at least a portion of the first storage chamber, the second storage chamber, and the flow path are surface-treated,
   the method comprising;
   filling an internal space defined by the first storage chamber, the second storage chamber and the flow path with a liquid to thereby store the particle analyzer in a state that the surface-treated portion is not in contact with air.
[2] The method for holding a particle analyzer according to the [1], wherein the liquid is water or phosphate buffer solution.
[3] A method for manufacturing a particle analyzer comprising;
   preparing a structural body for analysis having a first storage chamber in which a first liquid is stored, a second storage chamber in which a second liquid containing particles to be analyzed is stored, and a flow path connecting the first storage chamber in fluid communication with the second storage chamber,
   surface-treating at least a portion of the first storage chamber, the second storage chamber, and the flow path in the structural body for analysis to obtain a particle analyzer, and then,
   filling an internal space defined by the first storage chamber, the second storage chamber and the flow path with a liquid to store the particle analyzer in a housing in a state that the surface-treated portion is not in contact with air.
[4] The method for manufacturing a particle analyzer according to the [3], wherein the liquid is water or phosphate buffer solution.

### Effects of the Invention

According to the method for storing a particle analyzer of the present invention, deterioration of the measurement performance with the lapse of time in the particle analyzer in which the surface of the internal space in which the liquid is stored is surface-treated can be suppressed.

According to the method for manufacturing the particle analyzer of the present invention, it is possible to manufacture a particle analyzer in which deterioration of the measurement performance with the lapse of time is suppressed.

### Brief Description of the Drawings

FIG. 1 is a perspective view schematically showing an embodiment of a particle analyzer to be stored in the present invention.
FIG. 2 is a cross-sectional view schematically showing an embodiment of a particle analyzer to be stored in the present invention.
FIG. 3 is an explanatory view for explaining the storing process in Example 1.
FIG. 4 is an explanatory view for explaining the storing process in Example 1.
FIG. 5 is an explanatory view for explaining the storing process in Example 1.

### Mode for Carrying out the Invention

The following describes embodiments of the present invention, and the present invention is not limited to the following embodiments. It should be understood that various design changes, improvements or the like can be added based on ordinary knowledge of a skill in art without departing from the scope of the present invention.

### (1) Method for storing a particle analyzer

The method for storing a particle analyzer of the present invention is a method for storing a particle analyzer having a first storage chamber in which a first liquid is stored, a second storage chamber in which a second liquid containing particles to be analyzed is stored, and a flow path connecting the first storage chamber in fluid communication with the second storage chamber, and in which at least a portion of the first storage chamber, the second storage chamber, and the flow path are surface-treated, wherein the particle analyzer is stored with maintaining the surface-treated portion in a state of non-contact with air by filling internal space defined by the first storage chamber, the second storage chamber, and the flow path with a liquid.

According to the method for storing a particle analyzer of the present invention, it is possible to suppress the deterioration of the measurement performance with the lapse of time in the particle analyzer in which the surfaces constituting the first storage chamber, the second storage chamber, and the flow path are surface-treated.

In the present invention, the particle analyzer to be stored is an apparatus for analyzing particles in the following manner. That is, the first liquid stored in the first storage chamber and the second liquid stored in the second storage chamber (the second liquid includes particles to be analyzed such as exosomes) are charged with electricity, and the value of the current generated by this charging is measured. At this time, the particles contained in the second liquid in the second storage chamber move to the first storage chamber through the flow path by diffusion of fluid, electrophoresis, and the like. As the particles pass through the flow path, the measured current value changes (increases or decreases) depending on the characteristics (type, shape, size, etc.) of the particles. Therefore, it is possible to analyze the characteristics of the particles contained in the second liquid by measuring the current value.

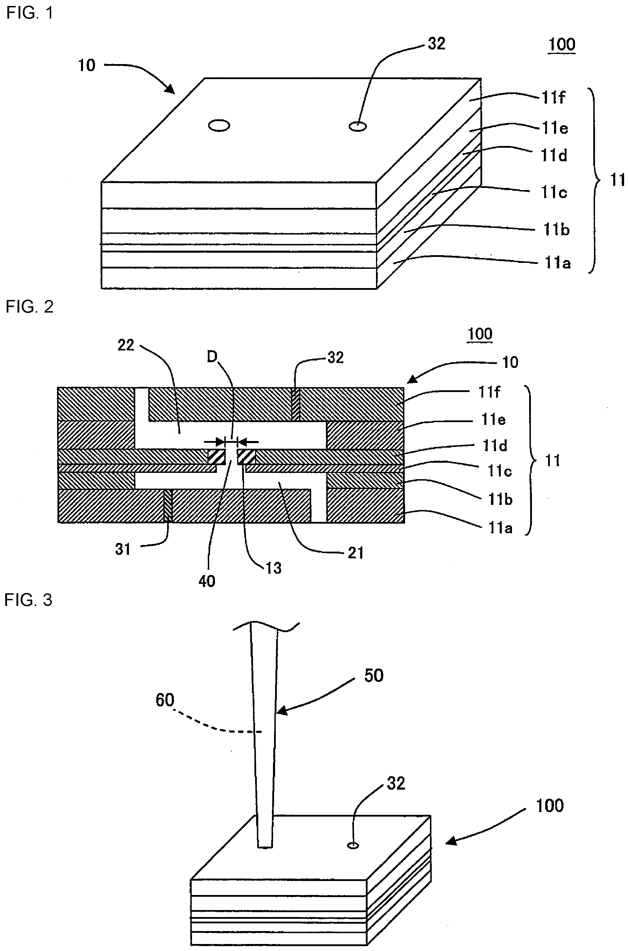

Examples of the particle analyzer to be stored in the present invention include a particle analyzer 100 as shown in FIGS. 1 and 2. The particle analyzer 100 includes a laminated body 10 in which plate-like members 11 are laminated (specifically, plate-like members 11a, 11b, 11c, 11d, 11e, and 11f are laminated in this order from the bottom), and the laminated body 10 has a first storage chamber 21 in which a first liquid is stored, a second storage chamber 22 in which a second liquid containing particles to be analyzed is stored, and a flow path 40 connecting the first storage chamber 21 in fluid communication with the second storage chamber 22. The particle analyzer 100 further includes a pair of electrodes having a first electrode 31 disposed in the first storage chamber 21 and a second electrode 32 disposed in the second storage chamber 22. The laminated body 10 includes a chip 13 having a nanopore (a through-hole with a nano-sized diameter) as a flow path 40 for connecting the first storage chamber 21 in fluid communication with the second storage chamber 22 at its center. Note that the "plate-like member" in the particle analyzer to be stored in the present invention is not limited to a member having a thickness such as a plate, and includes a member having a thin thickness, that is, a film member. The particle analyzer may not include a pair of electrodes.

The plate-like member 11 is not particularly limited regarding its material, and may be made of a material which is electrically and chemically inert itself. Specifically, examples thereof include glass, sapphire, ceramics, resins (for example, acrylic resins, etc.), rubbers (for example, silicone rubbers, etc.), elastomers, SiO₂, SiN, Al₂O₃ and the like.

The chip 13 is not particularly limited as to its material, and may include an insulating material which is electrically and chemically inert itself, and insulating. Specifically, examples thereof include glass, sapphire, ceramics, resins, rubbers, elastomers, SiO₂, SiN, and Al₂O₃.and the like.

FIGS. 1 and 2 employ a configuration that the laminated body 10 has a chip 13 in addition to the plate-like member 11. The plate-like member 11 and the chip 13 may be integrated. Specifically, a laminated body may include a substrate (plate-like member), a film forming substrate which is disposed on the substrate and composed of a plate-like member (film-like body) formed nanopores (a through-hole with a nano-sized diameter) as the flow path 40, and a plate-like member disposed on both sides of the film forming substrate (a predetermined groove is formed in the plate-like member to be a first storage chamber and a second storage chamber).

The laminated body 10 is not particularly limited as to its producing method, and may be produced by sequentially laminating plate-like members 11 in which predetermined groove is already formed, or by employing a photolithography method, an electron beam drawing method, and the like.

"Maintaining the surface-treated portion in a state of non-contact with air" means that the surface-treated surface constituting the internal space defined by the first storage chamber, the second storage chamber, and the flow path is not in contact with air, i.e., the surface is in a state of being shielded from air, and that such a state is maintained. Specifically, examples of which include that the internal space defined by the first storage chamber, the second storage chamber, and the flow path is filled with a liquid such as water.

The surface treatment is not particularly limited as long as it is a treatment for modifying the properties of the surface in the first storage chamber, the surface in the second storage chamber, and the surface in the flow path that are formed in the particle analyzer. The surface treatment may include, for example, treatment such as hydrophilization treatment or plasma treatment. A specific method of the surface treatment is not particularly limited, and examples of which include a method of irradiating excimer laser (specifically, a method of irradiating an ultraviolet laser using a mixed gas of a rare gas or halogen, etc. as a laser medium).

The surface treatment may be performed on a surface of at least a portion of the first storage chamber, the second storage chamber, and the flow path. The surface treatment may be performed preferably on a surface of at least the flow path, and more preferably on all surfaces of the first storage chamber, the second storage chamber, and the flow path (i.e., all surfaces constituting the internal space).

The diameter (maximum diameter) D of the flow path in the particle analyzer is not particularly limited, and may be about 50nm to 10,000nm. The diameter of the flow path can be appropriately set depending on the type and size of the particles to be analyzed.

The particles to be analyzed are not particularly limited, and examples thereof include exosomes, pollen, viruses, bacteria, and DNA.

Other conditions for storing the particle analyzer (for example, storing temperature, etc.) are not particularly limited. For example, it can be stored at room temperature.

In the present invention, the internal space defined by the first storage chamber, the second storage chamber, and the flow path is filled with a liquid such as water. Consequently, it is possible to suppress deterioration of the measurement performance with the lapse of time in the particle analyzer by a simple operation of filling the internal space with a liquid such as water, as compared with a case where the internal space is evacuated (vacuum processing).

The liquid filling the internal space is not particularly limited, and for example, water and a phosphate buffer solution, etc. can be used.

The water filling the internal space is preferably pure water (water having an electrical conductivity of 1×10^4 Ωm or more), and water having a lower electrical conductivity (ultrapure water), specifically, water having an electrical conductivity of 1.82×10^9 Ωm or more may be used.

The phosphate buffer solution is not particularly limited, and conventionally known ones can be used as appropriate.

The temperature of the liquid such as water filling the internal space is not particularly limited, and may be, for example, room temperature.

Further, in order to prevent the liquid such as water filling the internal space from volatilizing, the particle analyzer filled with the liquid such as water in the internal space may be immersed in a liquid filled in a container. The liquid to be filled in the container may be the same as the liquid filling the internal space (such as water). At this time, a preservative may be contained in order to prevent the propagation of bacteria in the liquid. Examples of the preservative include boric acid, paraben, benzalkonium chloride, sodium chloride, physiological saline, and buffer solution.

### (2) Method for manufacturing a particle analyzer of the present invention

An embodiment of a method for manufacturing a particle analyzer of the present invention is as follows. First, a structural body for analysis having a first storage chamber in which a first liquid is stored, a second storage chamber in which a second liquid containing particles to be analyzed is stored, and a flow path connecting the first storage chamber in fluid communication with the second storage chamber, is prepared. Thereafter, at least a portion of the surfaces of the first storage chamber, the second storage chamber, and the flow path in the prepared structural body for analysis is surface-treated to obtain a particle analyzer. Thereafter, the obtained particle analyzer is stored in a housing in a state that the surface-treated portion is not in contact with air by filling the internal space defined by the first storage chamber, the second storage chamber, and the flow path with a liquid. In this way, it is possible to obtain a particle analyzer stored in the housing (that is, a particle analyzer in a housing).

According to the manufacturing method, it is possible to manufacture a particle analyzer in which deterioration of the measurement performance with the lapse of time is suppressed.

The structural body for analysis is a structural body in a state before the surface treatment is performed on the above-described particle analyzer. The method of preparing the structural body is not particularly limited as long as the structural body has a first storage chamber, a second storage chamber, and a flow path, and a conventionally known method can be appropriately employed.

As the surface treatment for the structural body for analysis, the same treatment as the surface treatment described in the method for storing the particle analyzer described above can be employed.

"The particle analyzer is stored in a housing in a state that the surface-treated portion is not in contact with air" means performing the operation of bringing the surface-treated surface into a state of non-contact with air and storing the particle analyzer in the housing capable of maintaining the state. In the above operation, the means for maintaining the surface-treated surface in a state of non-contact with air, which has been described in the method for storing the particle analyzer mentioned above, can be appropriately employed. Specifically, there is a means for filling the internal space, i.e., the internal space defined by the first storage chamber, the second storage chamber, and the flow path, with a liquid such as water.

Further, when the internal space is filled with a liquid such as water, it is not necessary to prepare a device (e.g., a vacuum laminating device) unlike, for example, a mode in which the internal space is in a vacuum state, and the surface-treated surface can be easily brought into a state of non-contact with air.

The above-mentioned housing storing the particle analyzer is not particularly limited as long as the surface-treated surface in the particle analyzer can be brought into a state of non-contact with air, and a conventionally known container can be appropriately employed. Examples of the housing include a container made of synthetic resin, a bag made of synthetic resin (including a bag made by sticking two films together), a container made of glass, and the like. More specifically, a container in which a particle analyzer in which an internal space is filled with a liquid such as water is placed corresponds to the housing. The housing is not limited to a container, and may be a bag (including a bag made by sticking two films together).

### Examples

Hereinafter, the present invention will be specifically described based on examples, but the present invention is not limited to these examples.

### (Example 1)

A chip made of Si/SiN and having nanopores was disposed in a silicone rubber to manufacture a particle analyzer. Specifically, the particle analyzer was manufactured as follows. First, a plurality of plate-like members made of silicone rubber were prepared, and these plate-like members were bonded and laminated by excimer laser irradiation to produce a laminated body. At this time, "a chip made of Si/SiN and having nanopores" was arranged inside the laminated body. In the process of producing the laminated body in this manner, the chip is also irradiated with an excimer laser (vacuum ultraviolet (VUV)) to perform a modification treatment (surface treatment) of the nanopore surface. In producing the above-mentioned laminated body, a pair of electrodes were arranged at predetermined positions. Incidentally, a predetermined groove or pore is formed in each plate-like member, and a predetermined internal space is formed by producing a laminated body as described above.

A total of 15 particle analyzers were manufactured by the above procedure and used as test samples.

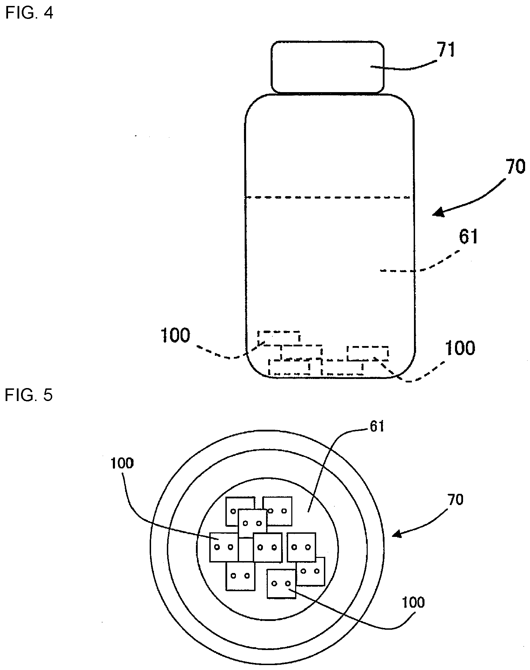

After manufacturing the particle analyzers, the internal spaces of the particle analyzers 100 were filled with pure water 60 (electrical conductivity 1×10^4 Ωm or more) using the micropipette 50 within 1 hour for all samples (see FIG. 3), and the particle analyzers 100 were immersed in the pure water 61 and stored in order to prevent the pure water filled in the internal space from volatilizing (see FIGS. 4 and 5). The storing temperature was room temperature. After storing them for a predetermined period in the same manner as in Example 1, evaluation was performed by the "particle detection evaluation" described below. The evaluation results are shown in FIG. 1. FIG. 4 shows a housing 70 which is a container in which pure water 61 and a plurality of particle analyzers 100 are placed. FIG. 5 shows a housing 70 shown in FIG. 4 in which the lid 71 of the holding body 70 is removed and viewed from above.

### (Comparative Example 1)

In the same manner as in Example 1, a chip made of Si/SiN having nanopores was disposed in a silicone rubber, and a pair of electrodes were further disposed to manufacture a total of 15 particle analyzers, which were used as test samples.

Thereafter, the particle analyzers were placed in a zippered plastic bag (a sealable polyethylene bag) and stored in the atmosphere. The storing temperature was room temperature. After storing them for a predetermined period in the same manner as in Example 1, evaluation was performed by the "particle detection evaluation" described below. The evaluation results are shown in FIG. 1.

### (Example 2,3)

In the same manner as in Example 1, a chip made of Si/SiN having nanopores was disposed in a silicone rubber, and a pair of electrodes were further disposed to manufacture a total of 15 particle analyzers, which were used as test samples.

With respect to the test samples thus prepared, in the same manner as in Example 1, the internal spaces of the particle analyzers 100 were filled with liquid using a micropipette 50 under the conditions shown in Table 1. Ultrapure water and phosphate buffer solution were used as the liquid filling the internal spaces, respectively. "Ultrapure water" had an electric conductivity of 1.82×10^9Ωm or more, and "phosphate buffer solution (PBS)" was used in which a PBS Buffer (manufactured by Nippon Gene Co., Ltd.) having a concentration of 10 times was diluted 10 times with ultrapure water described above and prepared into PBS having a concentration of 1 time. Thereafter, after storing them for a predetermined period in the same manner as in Example 1, evaluation was performed by the "particle detection evaluation" described below. The evaluation results are shown in FIG. 1.

### (Particle detection evaluation)

The evaluation was performed by the following method at 0 day (at the day of storage), 1 day, 5 days, 8 days, 21 days, and 30 days after the start of storing (the surface treatment which is an irradiation treatment of vacuum ultraviolet (VUV)). In the evaluation, a part was selected from a plurality of test samples prepared each time of the predetermined period elapsed from the start of storing (i.e., the elapsed days were 0, 1, 5, 8, 21, and 30), and evaluated. The evaluation results are shown in Table 1.

Each particle analyzer (the particle analyzers of Examples 1 to 3, and Comparative Example 1) stored for a predetermined period was evaluated for particle detection function by the following method. First, a phosphoric acid buffer solution diluted 1 time was injected into the first storage chamber, the second storage chamber, and the flow path of the particle analyzer, and the electric resistance was confirmed. Thereafter, a phosphate buffer solution in which standard particles were mixed was filled in the second storage chamber, and electrophoresis was generated by applying a voltage of 100mV to the phosphate buffer solution, and detection of the above-mentioned standard particles (specifically, Polybead Carboxylate manufactured by Polysciences, Inc) was performed. Then, the number of particles detected was measured.

As an evaluation criterion, when the number of particles detected (count number) was 100 or more, it is evaluated as "OK", and when the number of particles detected (count number) was less than 100, it is evaluated as "NG".

**[Table 1]**

| | | Comparative Example 1 | Example 1 | Example 2 | Example 3 |
|---|---|---|---|---|---|
| | | Atmosphere | Pure water | Ultrapure water | PBS (Phosphate buffer solution) |
| | | Evaluation | Evaluation | Evaluation | Evaluation |
| Elapsed period after VUV treatment (days) | 0 | OK | OK | OK | OK |
| | 1 | OK | OK | OK | OK |
| | 5 | OK | OK | OK | OK |
| | 8 | NG | OK | OK | OK |
| | 21 | NG | OK | OK | OK |
| | 30 | NG | OK | OK | OK |

From the results of Examples 1 to 3 and Comparative Example 1, it was confirmed that the number of particles detected was decreased early after manufacturing the particle analyzer in Comparative Example 1. However, the number of particles detected was not decreased early in Examples 1 to 3. Specifically, the number of particle counts was maintained even after 30 days had elapsed since the manufacture of the particle analyzer in any of the storing states in a liquid such as water. More specifically, the number of particle counts was 100 or more even after 30 days had elapsed since the manufacture of the particle analyzer. From this result, it was confirmed that, according to the method for storing a particle analyzer of Examples 1 to 3, deterioration of the measurement performance with the lapse of time in the particle analyzer could be suppressed, and the particle detection performance could be maintained for a long period of time. In the obtained particle analyzers (Examples 1 to 3), deterioration of the measurement performance with the lapse of time was suppressed, and the particle detection function was maintained for a long period of time.

### Industrial Applicability

The method for storing the particle analyzer of the present invention can be employed as a method for storing a particle analyzer for analyzing particles such as exosomes, pollen, viruses, bacteria and the like. Further, the method for manufacturing the particle analyzer of the present invention can be employed as a method for manufacturing a particle analyzer for analyzing particles such as exosomes, pollen, viruses, bacteria and the like.

### Description of Reference Numerals

10: laminated body, 11: plate-like member, 13: chip, 21: first storage chamber, 22: second storage chamber, 31: first electrode, 32: second electrode, 40: flow path, 50: micropipette, 60,61: pure water, 70: housing, 71: lid, 100: particle analyzer, D: diameter of flow path.

## Claims

1. A method for storing a particle analyzer having a first storage chamber in which a first liquid is stored, a second storage chamber in which a second liquid containing particles to be analyzed is stored, and a flow path connecting the first storage chamber in fluid communication with the second storage chamber, wherein at least a portion of the first storage chamber, the second storage chamber, and the flow path are surface-treated,
the method comprising;
filling an internal space defined by the first storage chamber, the second storage chamber and the flow path with a liquid to thereby store the particle analyzer in a state that the surface-treated portion is not in contact with air.

2. The method for holding a particle analyzer according to claim 1, wherein the liquid is water or phosphate buffer solution.

3. A method for manufacturing a particle analyzer comprising;
preparing a structural body for analysis having a first storage chamber in which a first liquid is stored, a second storage chamber in which a second liquid containing particles to be analyzed is stored, and a flow path connecting the first storage chamber in fluid communication with the second storage chamber,
surface-treating at least a portion of the first storage chamber, the second storage chamber and the flow path in the structural body for analysis to obtain a particle analyzer, and then,
filling an internal space defined by the first storage chamber, the second storage chamber, and the flow path with a liquid to store the particle analyzer in a housing in a state that the surface-treated portion is not in contact with air.

4. The method for manufacturing a particle analyzer according to claim 3, wherein the liquid is water or phosphate buffer solution.
